# EUROPÄISCHE PATENTSCHRIFT

(11) **EP 0 784 160 B1**
(45) Veröffentlichungstag und Bekanntmachung des Hinweises auf die Patenterteilung: **11.08.1999**
(21) Anmeldenummer: 95120197.9
(22) Anmeldetag: 20.12.1995
(51) Int. Cl.: F16B 12/02, A47B 96/14, A47B 47/00, A47F 7/00, A47F 5/00

(54) **Verkaufsständer**
Display stand
Présentation de vente

(43) Veröffentlichungstag der Anmeldung: 16.07.1997
(73) Patentinhaber: alfer-Aluminium Gesellschaft mbH, D-79793 Wutöschingen-Horheim (DE)
(72) Erfinder: Gehring, Udo, D-79771 Klettgau (DE); Speicher, Thomas, D-79761 Waldshut-Tiengen (DE); Wilbs, Thomas, D-79777 Ühlingen-Birkendorf (DE)
(74) Vertreter: Hübner, Hans-Joachim, Dipl.-Ing.

(56) Entgegenhaltungen:
- DE-A- 3 115 913
- DE-A- 3 511 814
- DE-U- 8 707 247
- FR-A- 1 562 972
- FR-A- 2 531 121
- US-A- 4 652 170

## Beschreibung

Die Erfindung betrifft einen Verkaufsständer nach dem Oberbegriff von Patentanspruch 1

Einen derartigen Verkaufsständer zeigt die DE-C-351 1814. Der bekannte Verkaufsständer weist einen rechteckigen, aus vier auf Gehrung geschnittenen Schenkeln bestehenden Bodenrahmen und einen ebenfalls aus Einzelschenkeln zusammengesetzten Deckrahmen auf. Die Profile von Bodenrahmen und Deckrahmen sind unterschiedlich. Die einzelnen Rahmenschenkel werden über Eckwinkel miteinander verschraubt. Der Bodenrahmen enthält ein Bodenbrett. Zwischen dem Bodenrahmen und dem Deckrahmen werden die Seiten- und Stirnwände in Form von Platten eingeschoben. Die Längsschenkel des Deckrahmens weisen, in das Innere des Ständers ragende Stege auf, in denen die Schlitze zur Führung der Trennwände ausgebildet sind. Der bekannte Verkaufsständer hat sich in der Praxis an sich bewährt, jedoch bedingen die unterschiedlichen Profile erhebliche Herstellungskosten. Mehrere Verkaufsständer können zwar aneinandergereiht, jedoch nicht formschlüssig miteinander verbunden werden.

Die US-A-4,652,170 zeigt ein Verbindungselement in Form einer quadratisch konturierten Säule mit Längsnuten in den vier Säulenflächen. Dieses Verbindungselement dient zur Herstellung von geraden, L-förmigen und kreuzförmigen Wandverbindungen, wobei die miteinander zu verbindenden Wände an ihren jeweiligen Rändern mit Einfaßprofilstücken versehen sind, welche V-förmige oder schwalbenschwanzförmige Vorsprünge aufweisen, die in die Längsnuten der Säule formschlüssig eingreifen, welche entsprechend hinterschnitten sind. Mit solchen Verbindungssäulen sollen Möbel montiert werden. Eine wackelfreie Verbindung der Stirn- und Seitenwände eines kastenartigen Verkaufsständers mit einem Boden wirft jedoch Probleme auf. Da die Einfaßprofilstücke der Wände mit ihren schwalbenschwanzförmigen Vorsprüngen in die entsprechend hinterschnittenen Nuten der Säulen eingeschoben werden, muß ein entsprechendes Schiebespiel vorhanden sein. Bei einem kastenförmigen Verkaufsständer mit vier Säulen ergeben sich acht Schiebeführungen, deren Toleranzen einander überlagern, so daß eine Wackelfreiheit allenfalls bei sehr genauer Fertigung der Säulen und der Einfaßprofile erreicht werden kann. Dieser Nachteil ist in dem Dokument erkannt und soll dadurch vermieden werden, daß stirnseitig in eine zentrale Kammer der Säule eine Schraube eingeschraubt wird, die die Kammerwände derart verbiegen soll, daß eine Verklemmung der Vorsprünge in den Nuten stattfindet. Allerdings findet die Verklemmung auch nur über den kurzen Bereich der Schraubenlänge statt. Wie eine Verwindungssteifigkeit eines, mit einem Boden versehenen Kastens erreicht werden soll, läßt dieses Dokument offen. Auch sagt dieses Dokument nichts darüber, wie ein Boden mit den Stirn- oder Seitenwänden des Kastens zu verbinden ist.

Die DE-A-3115913 zeigt ein Verbindungselement in Form eines Würfels, der in seinen Seitenflächen Schraublöcher aufweist, um stabförmige Bauelemente anschrauben zu können. Letztere sind Hohlprofile, die an ihren Seitenflächen Längsnuten aufweisen, in denen mit Einfaßprofilen versehene Böden einschiebbar sind.

Die FR-A-2531121 zeigt ein Verbindungsprofil für Wände oder Scheiben, deren Einfaßprofile aus Kunststoff in hinterschnittene Nuten des Verbindungsprofils einrasten.

Das Haltern von Trennwänden mittels Nuten oder Schlitzen, die über die ganze Höhe einander gegenüberliegender Seitenwände reichen, ist aus der FR-A-1562972 bekannt.

Aufgabe der Erfindung ist es den Verkaufsständer gemäß eingangs genannter Art dahingehend zu verbessern, daß mit wenigen unterschiedlich profilierten Bauteilen stabile und in sich verwindungssteife Verkaufsständer mit geringem Montageaufwand auf- und abgebaut werden können.

Diese Aufgabe wird mit einem Verkaufsständer gemäß Patentanspruch 1 gelöst.

In die beiden oben offenen Längsnuten des Bodens brauchen lediglich die Einfaßprofile eingeschoben zu werden, wonach die z.B. vorher mit den stirnseitigen Einfaßprofilen bestückte Seitenwände von oben her in die Längsnuten der Stirnwände eingefahren werden, um den Kasten des Verkaufsständers zu bilden. Nachdem die Seitenwände in die Einfaßprofile des Bodens eingefahren sind, sind die Stirnwände miteinander und mit dem Boden formschlüssig verankert, so daß der Verkaufsständer lediglich durch Einstecken der Trennwände vervollständigt werden kann. Die Einfaßprofile am Boden müssen nicht einmal mit den Seitenwänden verschraubt oder verklammert werden. Der Montageaufwand ist also denkbar gering. Da nur vier vertikale Schiebeführungen vorhanden sind, wird eine hohe Stabilität gewährleistet, und die Stirnwände mit der Unterseite des Bodens bündig liegen, decken sie die offenen Stirnseiten des Bodens ab, womit ein ansprechendes Aussehen sichergestellt ist. Die oben offenen Stirnwände bieten zusätzliche Einstellmöglichkeiten für Stangenmaterial und das Einstecken von Säulen für Schautafeln.

Anhand der Zeichnung, die Ausführungsbeispiele darstellt, wird die Erfindung näher beschrieben,.

Es zeigt:
FIG.1 eine 3-dimensionale Ansicht eines Verkaufsständers,
FIG.2 eine erste Ausführungsform eines Mehrkammerhohlprofils für die Stirnwände und den Boden, sowie mit zugehörigen Einfaß- und Verbindungsprofilstücken,
FIG:3 eine alternative Ausführungsform eines Mehrkammerhohlprofils für die Stirnwände und den Boden, sowie mit zugehörigen Einfaß- und Verbindungsprofilstücken,
FIG.4 einen Horizontalschnitt durch eine Seitenwand mit montierten Einfaßprofilstücken,
FIG.5 einen Horizontalschnitt ähnlich FIG.4, jedoch durch eine abgewandelte Ausführung der Profilstücke, die eine schraubenlose Befestigung gestatten,
FIG.6 einen Horizontalschnitt durch den montierten Verkaufsständer,
FIG.7 Horizontalschnitt, Seitenansicht und Vertikalschnitt eines Verkaufsständers in vergrößertem Maßstab,
FIG.8 den Vertikalschnitt des Verkaufsständers in vergrößerter Darstellung,
FIG.9 zwei rechtwinklig miteinander verbundene Verkaufsständergruppen
FIG.10 den Verkaufsständer im Horizontalschnitt,
FIG.11 eine Längsseitenansicht des Verkaufsständers gemäß FIG. 10,
FIG.12 die Verbindung zweier Verkaufsständer zu einer Baugruppe,
FIG.13 eine andere Verbindungsart mehrerer Verkaufsständer in anderer Konfiguration, und
FIG:14 eine sternförmige Verbindung mehrerer Verkaufsständer.

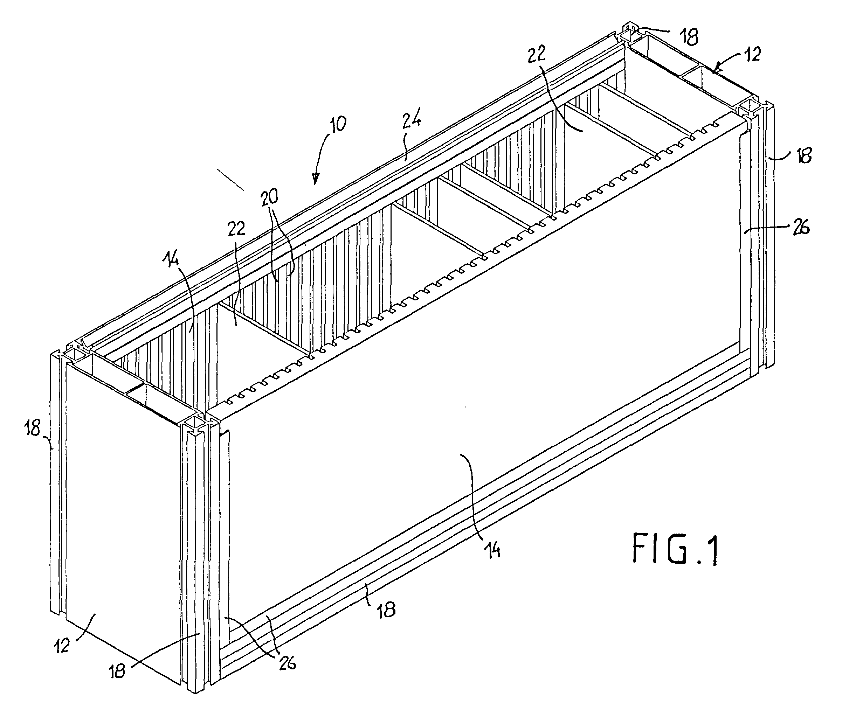

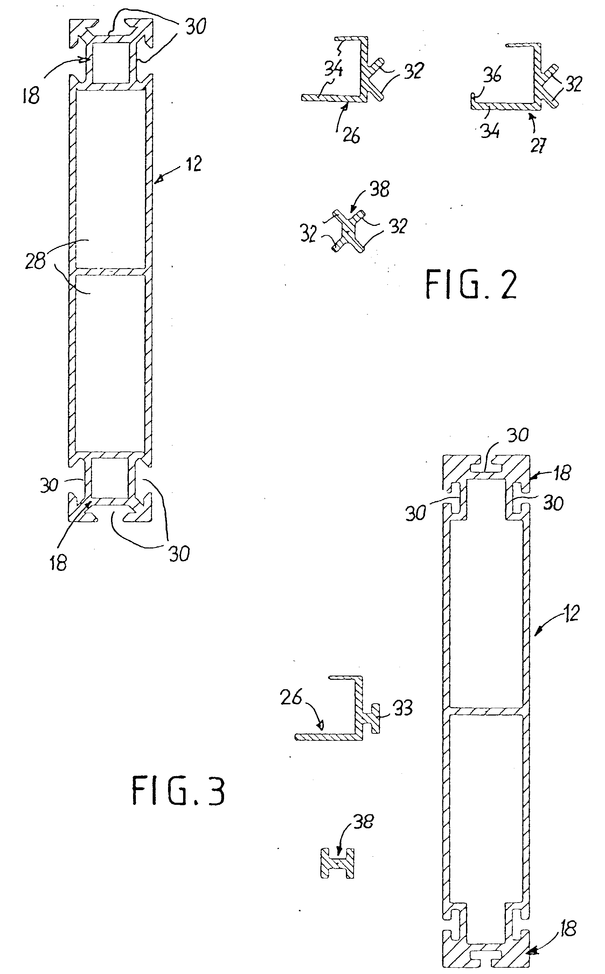

Der Verkaufsständer 10 gemäß FIG. 1 weist zwei gegenüberliegende Stirnwände 12 und zwei rechtwinklig dazu stehende Seitenwände 14 und einen Boden 16 auf. Die beiden Stirnwände 12 bestehen aus einstückigen Hohlprofilen, in die jeweils zwei Randschienen 18 integriert sind. Der Boden 16 besteht aus demselben Hohlprofil wie die Stirnwände 12. Die Randschienen 18 des Bodens 16 sind formschlüssig mit den beiden Seitenwänden 14 verbunden, die auf den Randschienen 18 ruhen. Die Höhe der Stirnwände 12 ist um die Dicke der Randschienen 18 des Bodens 16 größer als die Höhe der Seitenwände 14. Die Stirnwände 12 ruhen also mit ihren Randschienen 18 unmittelbar auf der Aufstellfläche des Verkaufsständers 10 und decken die Stirnseiten der Seitenwände 14 und des Bodens 16 ab. Die Seitenwände 14 sind Rechteckplatten, deren Länge gleich derjenigen des Bodens 16 ist. Innenseitig sind die Längswände 14 mit einer Vielzahl vertikaler Schlitze 20 versehen, die über die ganze Höhe der Seitenwände 14 laufen und zum Einstecken von Trennwänden 22 dienen. Auf die rückseitige Seitenwand 14 ist eine separate Abdeckschiene 24 aufgesetzt, die abnehmbar ist, um die Trennwände 22 versetzen zu können. Zur Verbindung der Randschienen 18 mit den Seitenwänden 14 und dem Boden 16 dienen Einfaßprofilstücke 26, die nachstehend anhand der Figuren 2 und 3 erläutert werden.

Figur 2 zeigt einen Querschnitt eines Stirnwand-Hohlprofils, das an den gegenüberliegenden Rändern mit Randschienen 18 einstückig verbunden ist. In der Stirnwand 12 werden zwei Kammern 28 gebildet, die zur Unterbringung von stangenförmigem Verkaufsgut dienen. In den drei freiliegenden Seitenflächen der Randschienen 18 sind gleichprofilierte Längsnuten 30 ausgebildet, die gemäß FIG.2 schwalbenschwanzförmig und gemäß FIG.3 T-förmig ausgebildet sind. Die Seitenflächen der Randschienen 18 liegen mit denjenigen der Stirnwand 12 bündig. Die Stirnwand jeder Randschiene liegt rechtwinklig dazu. Das Einfaßprofilstück 26 gemäß FIG.2 weist zwei gespreizte Schenkel 32 auf, mit denen das Profilstück 26 in einer der Längsnuten 30 formschlüssig verankert werden kann. Auf der gegenüberliegenen Seite hat das Profilstück 26 zwei parallele Schenkel 34 unterschiedlicher Länge, deren lichter Abstand der Stärke der Seitenwände 14 entspricht. Der kürzere Schenkel ist dünner als der längere Schenkel und übergreift die jeweilige Seitenwand 14 außenseitig. Der längere Schenkel 34 kann Bohrungen aufweisen, um das Profilstück 26 an der Seitenwand 14 festzuschrauben. Alternativ ist es möglich, das Profilstück 26 auch im Stirnwandbereich der Seitenwand 14 zu verkleben. Das Einfaßprofilstück 27 gemäß FIG.2 weist zusätzlich einen vom längeren der beiden parallelen Schenkel 34 nach innen vorspringenden Steg 36 auf, der in eine entsprechende Nut oder einen Schlitz 20 der Seitenwand eingreift, so daß eine schraubenlose Befestigung der Profilstücke 27 an der Seitenwand 14 möglich ist.

Die beiden Seitenwände 14 werden entweder im Herstellungsbetrieb oder am Aufstellort an den Seitenrändern und dem Bodenrand mit den Einfaßprofilstücken 26 oder 27 versehen. Dann werden die Seitenwände 14 mit den bodenseitigen Spreizschenkeln 32 in die Längsnuten 30 der Randschienen 18 des Bodens 16 eingefahren, wonach die beiden Stirnwände mit den entsprechenden Längsnuten 30 an den Randschienen 18 auf die Spreizschenkel 32 der vertikalen Einfaßprofilstücke 26 oder 27 aufgesetzt und bis auf die Aufstellfläche des Verkaufsständers 10 nach unten geschoben werden. Die Montage erfordert keinerlei Hilfsmittel und auch keine Werkzeuge und nur eine kurze Montagedauer. Alle Wände und der Boden sind dank der Randschienen 18 formschlüssig miteinander verbunden.

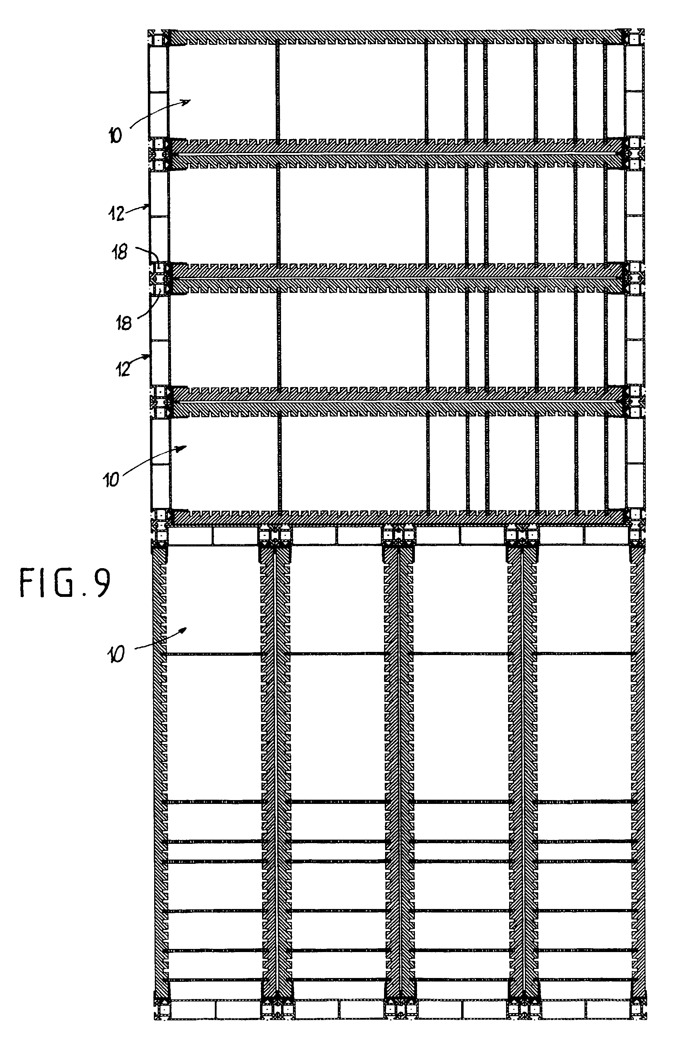

FIG.2 zeigt ein Verbindungsprofilstück 38, das in erster Annäherung einen X-förmigen Querschnitt hat und aus einer spiegelbildlichen Verdoppelung der beiden gespreizten Schenkel 32 besteht. Dieses Verbindungsprofilstück 38 dient zur Verbindung zweier Randschienen 18, um mehrere Einzelverkaufsständer zu einer Verkaufsständergruppe miteinander zu verbinden, wie dies in den Figuren 9 und 11 bis 14 veranschaulicht ist. Dabei fahren jeweils zwei Spreizschenkel 32 des Profilstückes 38 in einander zugewandte Längsnuten 30 aneinanderstehender Randschienen 18.

Die Stirnwand 12 gemäß FIG.3 unterscheidet sich von derjenigen gemäß FIG.2 nur dadurch, daß die Längsnuten 30 in den Randschienen 18 nicht schwalbenschwanzförmig sondern T-förmig ausgebildet sind. Entsprechend weist das Einfaßprofilstück 26 statt der gespreizten Schenkel 32 einen zur Längsnut 30 komplementären T-Steg 33 auf. Das in FIG.3 ebenfalls dargestellte Verbindungsprofilstück 38 ist somit ein Doppel-T. Es versteht sich, daß - wie in FIG.2 gezeigt das Einfaßprofilstück 27 und eine separate Randschiene 19 genauso in Verbindung mit den T-Nuten verwendet werden können.

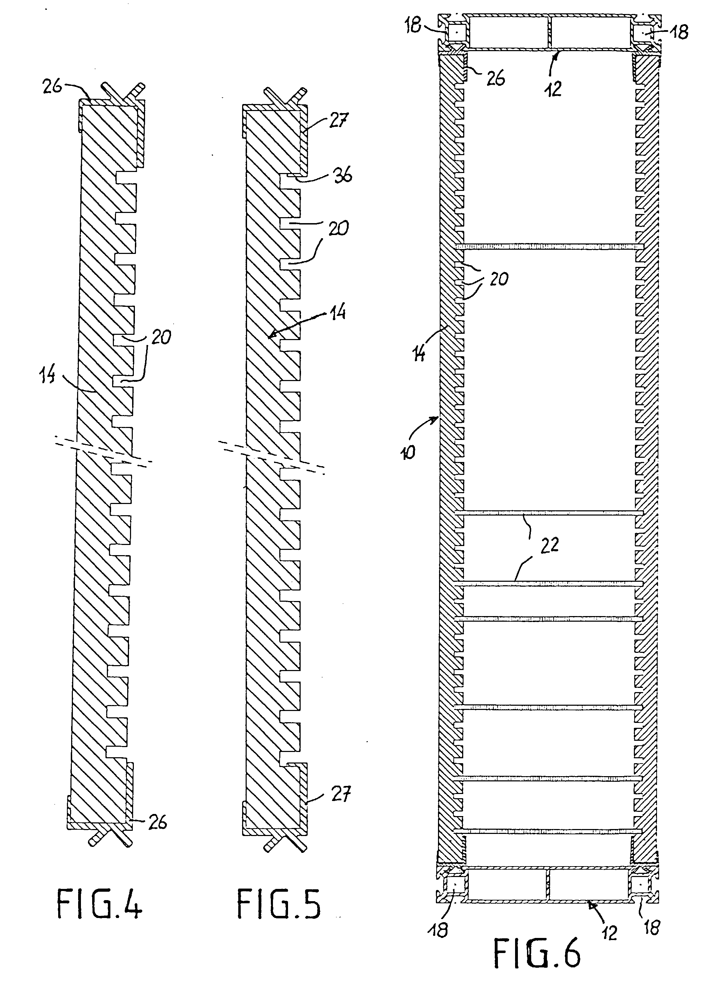

FIG.4 zeigt einen Horizontalschnitt durch eine Seitenwand 14 mit den beiden endseitig aufgesetzten Einfaßprofilstücken 26, die angeklebt und/oder angeschraubt sind. Bei FIG.5 wird das sich mechanisch verhakende Einfaßprofilstück 27 verwendet, bei dem der Verankerungssteg 36 in den randseitigen Schlitz 20 eingreift, der dafür etwas verbreitert ist.

FIG.6 zeigt einen Horizontalschnitt durch den Verkaufsständer 10 mit den innenseitig geschlitzten Seitenwänden 14, den Einfaßprofilen 26 und den beiden Stirnwänden 12 mit integrierten Randschienen 18.

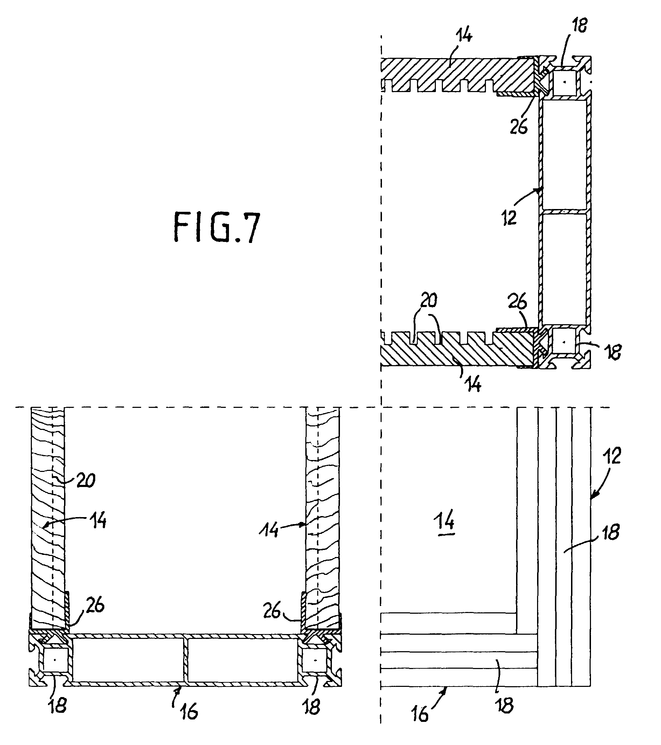

Bei FIG.7 ist zu sehen, daß dasselbe Profil mit den einstückigen Randschienen 18 sowohl für die Stirnwand 12 als auch für den Boden 16 verwendet wird.

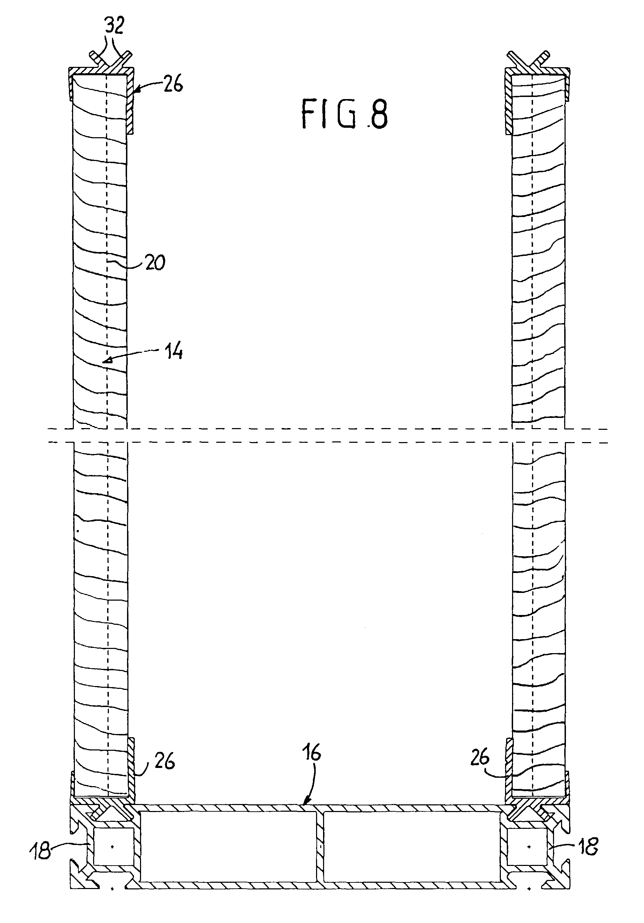

FIG.8 zeigt den Verkaufsständer im Vertikalschnitt in größerem Maßstab. Auf den Oberrändern der Seitenwände 14 sind nach Einsetzen der Trennwände Einfaßprofilstücke 26 lose aufgeschoben, die hier aus optischen Gründen als Abdeckprofile dienen. Die gespreizten Schenkel 32 eignen sich zum Aufschieben oder aufclipsen von Preisschildern.

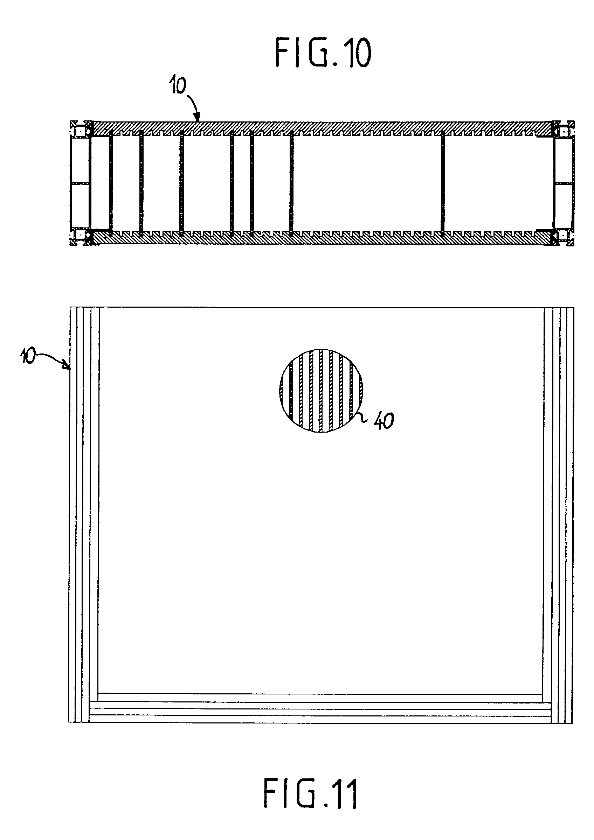

Die Figuren 10 und 11 zeigen den Verkaufsständer 10 im Querschnitt und in Längsseitenansicht. In einer Seitenwand ist ein Griffloch 40 veranschaulicht. Vorzugsweise sind an beiden Seiten solche Löcher 40 vorgesehen, um den Verkaufsständer leichter verschieben zu können.

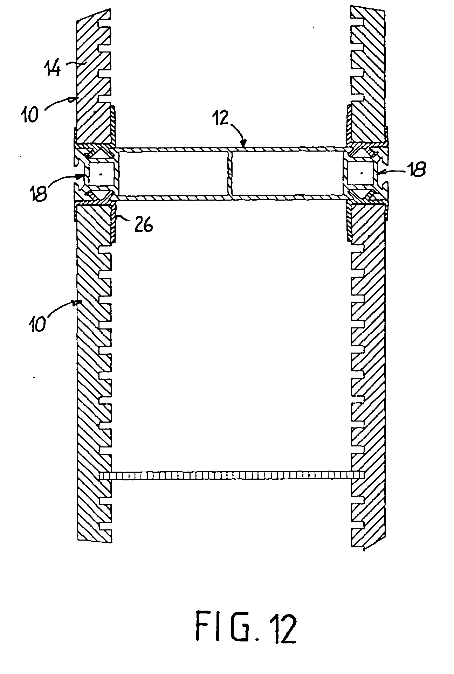

FIG. 12 zeigt die unmittelbare Ankoppelung zweier Verkaufsständer 10 unter Verwendung nur einer Stirnwand 12, in deren Randschienen 18 gegenüberliegende Einfaßprofilstücke 26 eingefahren sind. Die Stirnwand 12 bildet hier eine Trennwand zwischen den beiden Verkaufsständern 10.

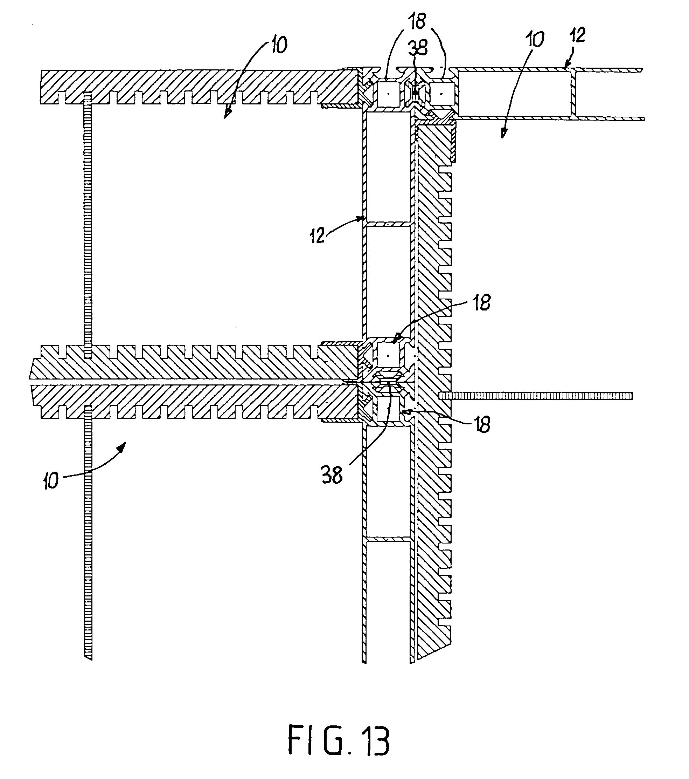

Gemäß FIG.13 wird ein Verkaufsständer 10 mit zwei rechtwinklig anschließenden Verkaufsständern 10 dadurch gekuppelt, daß in die einander zugewandten Längsnuten zweier fluchtend und eng aneinanderliegender Randschienen 18 der übereck liegenden Stirnwände 12 das Verbindungsprofilstück 38 eingeschoben ist. Auch die beiden parallel liegenden Verkaufsständer 10 werden an den beiden aneinanderliegenden Randschienen 18 durch ein Verbindungsprofilstück 38 miteinander formschlüssig verbunden. In diesem Zusammenhang sei bemerkt, daß das Verbindungsprofilstück 38 nicht notwendigerweise über die ganze Länge der Randschienen 18 reichen muß, sondern auch aus mehreren kurzen Profilstücken bestehen kann. Gleiches gilt für die Einfaßprofilstücke 26, 27.

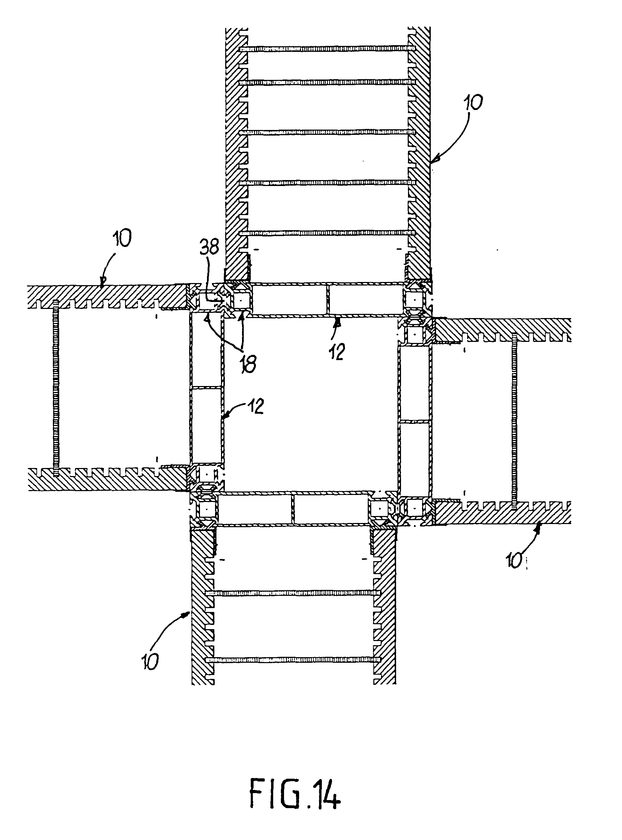

Bei der sternförmigen Anordnung der vier Verkaufsständer 10 gemäß FIG.14 werden ebenfalls benachbarte Randschienen 18 übereck liegender Stirnwände 12 durch Verbindungsprofilstücke 38 miteinander formschlüssig verbunden.

FIG.9 zeigt eine erste Gruppe querstehender Verkaufsständer und eine anschließende Gruppe längsstehender Verkaufsständer mit größerer Länge. Die Länge der Verkaufsständer 10 beträgt das exakte Mehrfache ihrer Breite. So haben gemäß FIG.9 vier aneinandergestellte Verkaufsständer 10 eine Gesamtbreite, die der Länge der querstehenden Verkaufsständer entspricht. Die Verkaufsständer gemäß FIG.9 sind unmittelbar aneinander gestellt, so daß jeweils zwei einander berührende Randschienen 18 benachbarter Verkaufsständer 10 durch ein Verbindungsprofilstück 38 gemäß FIG.4 gekoppelt werden können.

## Patentansprüche

1. Verkaufsständer mit zwei parallelen rechteckigen Seitenwänden (14), dazu rechtwinkligen Stirnwänden (12), einem Boden (16), einer Anzahl nach oben herausziehbarer stirnwandparalleler Trennwände (22), die jeweils in einem Paar einander zugewandter, querausgefluchteter, den Seitenwänden (14) zugeordneter Schlitze (20) gehaltert sind, wobei der Boden (16) randseitige, nach oben offene Nuten (30) aufweist, mittels deren die Seitenwände (14) formschlüssig mit dem Boden (16) verbunden sind, **dadurch gekennzeichnet, daß** der Boden (16) und die Stirnwände (12) je aus einem einstückigen Mehrkammerhohlprofil bestehen und denselben Profilquerschnitt aufweisen, welcher an seinen beiden Längsrändern an mindestens einer Breitseite je eine hinterschnittene Längsnut (30) aufweist, daß die Seitenwände (14) an je drei ihrer vier Ränder mit Einfaßprofilstücken (26, 27) versehen sind, die je einen vorspringenden Steg (32, 33) aufweisen, der formschlüssig in die Längsnuten (30) des Bodens (16) und der Stirnwände (12) paßt, daß die Stirnwände (12) mit ihren Bodenflächen mit der Unterseite des Bodens (16) wenigstens angenähert bündig liegen und miteinander und mit dem Boden (16) durch die Seitenwände (14) formschlüssig verbunden sind, und daß die Schlitze (20) in den Seitenwänden (14) vorgesehen sind und über wenigstens den größten Teil deren Höhe verlaufen.

2. Verkaufsständer nach Anspruch 1, **dadurch gekennzeichnet, daß** die Stirnwände (12) und der Boden (16) an den Rändern beider Breitseiten und an den Schmalseiten je eine Längsnut (30) aufweisen.

3. Verkaufsständer nach Anspruch 1 oder 2, **dadurch gekennzeichnet, daß** die Einfaßprofilstücke (26, 27) über wenigstens einen Teil der Länge der Längsnuten (30) reichen.

4. Verkaufsständer nach einem der Ansprüche 1 bis 3, **dadurch gekennzeichnet, daß** die Einfaßprofilstücke (26, 27) zwei parallele Schenkel (34) aufweisen, zwischen denen die Seitenwände (14) eingepaßt sind.

5. Verkaufsständer nach Anspruch 4, **dadurch gekennzeichnet, daß** wenigstens einer der parallelen Schenkel (34) des Einfaßprofilstückes (27) einen winklig vorspringenden Steg (36) aufweist, welcher in den randseitigen Schlitz (20) oder eine benachbarte Nut der Seitenwand formschlüssig eingreift.

6. Verkaufsständer nach einem der Ansprüche 1 bis 5, **dadurch gekennzeichnet, daß** er mit einem weiteren, bündig anschließenden Verkaufsständer durch wenigstens zwei spiegelbildlich zu deren Berührungsebene ausgebildete, formschlüssig in die einander jeweils zugewandten Längsnuten (30) der Stirnwände (12) eingreifende Verbindungsprofilstücke (38) verbunden ist.

7. Verkaufsständer nach einem der Ansprüche 1 bis 6, **dadurch gekennzeichnet, daß** die Längsnuten (30) ein schwalbenschwanz- oder T-förmiges Profil aufweisen.

8. Verkaufsständer nach einem der Ansprüche 1 bis 7, **dadurch gekennzeichnet, daß** die oben offenen Stirnwände mehrere Kammern (28) zum Einstellen von stangenförmigem Verkaufsgut aufweisen.

## Claims

1. A display stand comprising two parallel rectangular side walls (14), end walls (12) at rights angles thereto, a base (16) and a plurality of partitions (22) removable upwards and parallel with the end walls (12) and each mounted in a pair of facing, transversely aligned slots (20) associated with the side walls (14), wherein the edges of the base (16) are provided with upwardly open grooves (30), by means of which the side walls (14) are positively connected to the base (16), characterised in that the base (16) and the end walls (12) each comprise a one-piece multi-chamber hollow section and have the same cross-section, which has an undercut longitudinal groove (30) along both its longitudinal edges on at least one broad side, in that the side walls (14) are provided on three of their four edges with profiled edging pieces (26, 27) each having a projecting member (32, 33) engaging positively in the longitudinal grooves (30) of the base (16) and the end walls (12), in that the base surfaces of the end walls (12) are at least substantially flush with the underside of the base (16) and are positively connected to one another and to the base (16) by the side walls (14), and in that the slots (20) are provided in the side walls (14) and extend over at least the majority of the height thereof.

2. A display stand according to claim 1, characterised in that the end walls (12) and the base (16) each have a longitudinal groove (30) along the edges of both broad sides and along the narrow sides.

3. A display stand according to claim 1 or 2, characterised in that the profiled edging pieces (26, 27) extend over at least part of the length of the longitudinal grooves (30).

4. A display stand according to any one of claims 1 to 3,
characterised in that the profiled edging pieces (26, 27) have two parallel limbs (34), between which the side walls (14) are fitted.

5. A display stand according to claim 4, characterised in that at least one of the parallel limbs (34) of the profiled edging piece (27) has a member (36) projecting at an angle and engaging positively in the edge slot (20) or an adjacent groove of the side wall.

6. A display stand according to any one of claims 1 to 5,
characterised in that it is connected to a further display stand in alignment therewith by means of at least two profiled connecting pieces (38) engaging positively in the facing longitudinal grooves (30) of the end walls (12) and formed symmetrically relative to the contact plane of the display stands.

7. A display stand according to any one of claims 1 to 6,
characterised in that the longitudinal grooves (30) are dovetailed or T-shaped in section.

8. A display stand according to any one of claims 1 to 7,
characterised in that the upwardly open end walls have a plurality of chambers (28) for holding rod-shaped merchandise.

## Revendications

1. Présentoir de vente, avec deux parois latérales (14) rectangulaires parallèles, des parois frontales (12) perpendiculaires à ces dernières, un fond (16), un nombre de cloisons (22), pouvant être retirées vers le haut et parallèles aux parois frontales, maintenues chacune dans une paire de fentes (20) se faisant face, alignées transversalement et associées aux parois latérales (14), le fond (16) présentant, du côté du bord, des rainures (3()) ouvertes vers le haut, à l'aide desquelles les parois latérales (14) sont assemblées, en liaison de forme, avec le fond (16), caractérisé par le fait que le fond (16) et les parois frontales (12) sont constitués, chacun, d'un profilé creux d'une seule pièce à chambres multiples et présentent la même section de profilé, lequel présente, sur chacun de ses deux bords longitudinaux, sur au moins un côté large, une rainure longitudinale (30) à contre-dépouille, que les parois latérales (14) sont pourvues, chacune, sur trois de leurs bords, de longueurs de profilé d'encadrement (26, 27) présentant, chacun, une languette en saillie (32, 33) s'adaptant en liaison de forme dans les rainures longitudinales (3()) du fond (16) et des parois frontales (12), que les parois frontales (12) forment, par leurs surfaces inférieures, une surface au moins environ plane avec le côté inférieur du fond (16) et sont assemblées en liaison de forme l'une à l'autre et avec le fond (16) par l'intermédiaire des parois latérales (14), et que les fentes (20) sont prévues dans les parois latérales (14) et s'étendent sur au moins la majeure partie de leur hauteur.

2. Présentoir de vente suivant la revendication 1, caractérisé par le fait que les parois frontales (12) et le fond (16) présentent, chacun, sur les bords des deux côtés larges et sur les côtés étroits, une rainure longitudinale (30).

3. Présentoir de vente suivant la revendications 1 ou 2, caractérisé par le fait que les longueurs de profilé d'encadrement (26, 27) s'étendent sur au moins une partie de la longueur des rainures longitudinales (30).

4. Présentoir de vente suivant l'une des revendications 1 à 3, caractérisé par le fait que les longueurs de profilé d'encadrement (26, 27) présentent deux branches (34) parallèles entre lesquelles sont adaptées les parois latérales (14).

5. Présentoir de vente suivant la revendication 4, caractérisé par le fait qu'au moins l'une des branches (34) parallèles de la longueur de profilé d'encadrement (26, 27) présente une languette (36), faisant saillie perpendiculairement, qui s'engage, en liaison de forme, dans la fente (2()) du côté du bord ou dans une rainure adjacente de la paroi latérale.

6. Présentoir de vente suivant l'une des revendications 1 à 5, caractérisé par le fait qu'il est assemblé avec un autre présentoir de vente successif en formant une surface plane, par au moins deux longueurs de profilé d'assemblage (38) réalisées en image-miroir par rapport à leur plan de contact et s'engageant en liaison de forme dans les rainures longitudinales (30) se faisant face des parois latérales (12).

7. Présentoir de vente suivant l'une des revendications 1 à 6, caractérisé par le fait que les rainures longitudinales (3()) présentent un profil en queue d'aronde ou en "T".

8. Présentoir de vente suivant l'une des revendications 1 à 7, caractérisé par le fait que les parois frontales ouvertes vers le haut présentent plusieurs chambres (28) destinées au placement de produits à vendre en forme de barres.
